# EUROPEAN PATENT APPLICATION

(11) **EP 4 775 457 A1**
(43) Date of publication of application: **15.07.2026**
(21) Application number: 23951456.5
(22) Date of filing: 05.09.2023
(51) Int. Cl.: B60R 16/033, B62D 5/04

(54) **AUTOMOTIVE POWER SUPPLY DEVICE AND METHOD FOR CONTROLLING AUTOMOTIVE POWER SUPPLY DEVICE**

(71) Applicant: JTEKT CORPORATION, Kariya-shi, Aichi 448-8652 (JP)
(72) Inventor: OTA, Kohei, Kariya-shi, Aichi 448-8652 (JP); SATO, Fumihiko, Kariya-shi, Aichi 448-8652 (JP); HIBINO, Tokuaki, Kariya-shi, Aichi 448-8652 (JP); INABA, Daiki, Kariya-shi, Aichi 448-8652 (JP); NITTA, Hiroki, Kariya-shi, Aichi 448-8652 (JP)
(74) Representative: Winter, Brandl - Partnerschaft mbB
(86) International application number: PCT/JP2023/032413
(87) International publication number: WO 2025/052552

(57) **Abstract**

A control circuit of a vehicle power supply device (1) is configured to execute, when a start switch of a vehicle is switched to an ON state, an initial check process including one or more abnormality determinations for detecting an abnormality of the vehicle power supply device (1), and execute, when the start switch is switched to an OFF state, a discharging process in which an auxiliary power supply (41) is discharged through a boost circuit (42) until the voltage of the auxiliary power supply reaches a predetermined voltage. The control circuit is further configured to perform, before execution of the one or more abnormality determinations, a restart determination for determining whether at least one of a voltage on the input side of the boost circuit (42) in the discharge line (Lsu) and a voltage on the output side of the boost circuit in the discharge line is greater than or equal to a voltage threshold, and, when at least one of the voltages is greater than or equal to the voltage threshold, not determine that an abnormality has occurred in the vehicle power supply device (1) by a predetermined abnormality determination.

## Description

### TECHNICAL FIELD

The present disclosure relates to vehicle power supply devices and methods for controlling a vehicle power supply device.

### BACKGROUND ART

For example, Patent Document 1 discloses a vehicle power supply device that supplies electric power to a steering device of a vehicle. The vehicle power supply device is provided in a power supply path that supplies electric power from an external power supply mounted on the vehicle to the steering device. The power supply device includes an auxiliary power supply, a plurality of switching elements that changes the connection state of the auxiliary power supply with the power supply path, and a power supply control device that controls the plurality of switching elements. The power supply control device supplies electric power from the external power supply to the steering device when the voltage of the external power supply is normal, and changes ON/OFF states of the switching elements so as to supply electric power from the auxiliary power supply to the steering device when the voltage of the external power supply decreases.

### Related Art Documents

### Patent Documents

Patent Document 1: Japanese Unexamined Patent Application Publication No. 2023-63741 (JP 2023-63741 A)

### SUMMARY OF THE INVENTION

### Problem to be Solved by the Invention

In a vehicle power supply device such as described above, for example, an abnormality such as a short-circuit failure may occur in any one of a plurality of switching elements. Therefore, it is desirable that the vehicle power supply device detect an abnormality that has occurred in the device itself, and furthermore, not erroneously determine that an abnormality has occurred in the device even though no abnormality has actually occurred.

Such desirability is not limited to the case where electric power is supplied to a steering device, but also applies to cases where electric power is supplied to other power supply targets.

### Means for Solving the Problem

One aspect of the present disclosure provides a vehicle power supply device configured to supply electric power to a power supply target. The vehicle power supply device includes: a power supply line that constitutes a part of a power supply path through which electric power is supplied from an external power supply to the power supply target; a discharge line branching from the power supply line; a charge line branching from the power supply line and connected in parallel with the discharge line; an auxiliary power supply connected to the power supply line via the discharge line and the charge line; a boost circuit provided in the discharge line; a buck circuit provided in the charge line; a plurality of switching elements provided in the discharge line and the charge line; and a control circuit configured to control the plurality of switching elements. The control circuit is configured to execute, when a start switch of a vehicle is switched to an ON state, an initial check process including one or more abnormality determinations for detecting an abnormality of the vehicle power supply device, and execute, when the start switch is switched to an OFF state, a discharging process in which the auxiliary power supply is discharged through the boost circuit until the voltage of the auxiliary power supply reaches a predetermined voltage. The one or more abnormality determinations include a predetermined abnormality determination that is affected by a voltage of at least one of the discharge line and the charge line. The control circuit is further configured to perform, before execution of the one or more abnormality determinations, a restart determination for determining whether at least one of a voltage on the input side of the boost circuit in the discharge line and a voltage on the output side of the boost circuit in the discharge line is greater than or equal to a voltage threshold, and, when at least one of the voltages is greater than or equal to the voltage threshold, not determine that an abnormality has occurred in the vehicle power supply device by the predetermined abnormality determination.

Another aspect of the present disclosure provides a method for controlling a vehicle power supply device configured to supply electric power to a power supply target. The vehicle power supply device includes: a power supply line that constitutes a part of a power supply path through which electric power is supplied from an external power supply to the power supply target; a discharge line branching from the power supply line; a charge line branching from the power supply line and connected in parallel with the discharge line; an auxiliary power supply connected to the power supply line via the discharge line and the charge line; a boost circuit provided in the discharge line; a buck circuit provided in the charge line; and a plurality of switching elements provided in the discharge line and the charge line. The method includes: executing, when a start switch of a vehicle is switched to an ON state, an initial check process including one or more abnormality determinations for detecting an abnormality of the vehicle power supply device; and executing, when the start switch is switched to an OFF state, a discharging process in which the auxiliary power supply is discharged through the boost circuit until a voltage of the auxiliary power supply reaches a predetermined voltage. The one or more abnormality determinations include a predetermined abnormality determination that is affected by a voltage of at least one of the discharge line and the charge line. The method further includes performing, before execution of the one or more abnormality determinations, a restart determination for determining whether at least one of a voltage on the input side of the boost circuit in the discharge line and a voltage on the output side of the boost circuit in the discharge line is greater than or equal to a voltage threshold. When at least one of the voltages is greater than or equal to the voltage threshold, the predetermined abnormality determination does not determine that an abnormality has occurred in the vehicle power supply device.

### BRIEF DESCRIPTION OF THE DRAWINGS

[FIG. 1] FIG. 1 is a schematic configuration diagram of a vehicle power supply device according to one embodiment and a steering device that is a power supply target thereof.
[FIG. 2] FIG. 2 is a block diagram illustrating an electrical configuration of the vehicle power supply device of FIG. 1.
[FIG. 3] FIG. 3 is a flowchart illustrating procedures of various processes executed by a power supply control circuit in FIG. 2.
[FIG. 4] FIG. 4 shows graphs illustrating an example of changes in the boost-input-side voltage, the boost-output-side voltage, the buck-input-side voltage, and the buck-output-side voltage before and after execution of a discharging process by the power supply control circuit in FIG. 2.

### MODES FOR CARRYING OUT THE INVENTION

Hereinafter, an embodiment of a vehicle power supply device and a method for controlling a vehicle power supply device will be described with reference to the drawings.

### (Overall Configuration)

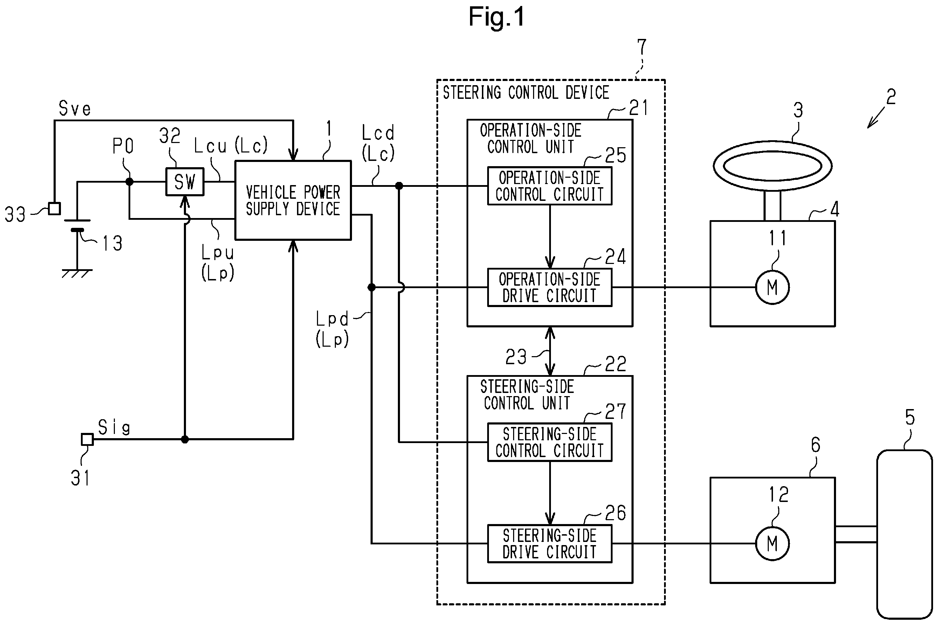

As shown in FIG. 1, a vehicle power supply device 1 of the present embodiment supplies electric power to a steering device 2 of a vehicle that is a power supply target. The steering device 2 is a steer-by-wire steering device. The steering device 2 includes an operation unit 4 operated by a driver via a steering wheel 3, a steering unit 6 that steers steered wheels 5, and a steering control device 7 that controls operation of the operation unit 4 and the steering unit 6. The steering device 2 may have a structure in which a power transmission path between the operation unit 4 and the steering unit 6 is mechanically separated at all times, or may have a structure in which the operation unit 4 and the steering unit 6 are selectively mechanically disconnectable from each other by the clutch.

The operation unit 4 includes an operation-side motor 11. The operation-side motor 11 generates an operation reaction force that resists operation of the steering wheel 3 by the driver. The steering unit 6 includes a steering-side motor 12. The steering-side motor 12 generates a steering force that steers the steered wheels 5.

The operation-side motor 11 and the steering-side motor 12 are connected to the steering control device 7. The operation-side motor 11 may include a plurality of coil groups that is supplied with electric power through a plurality of power supply systems electrically independent of each other. That is, the operation-side motor 11 may be an electrically redundant motor. Similarly, the steering-side motor 12 may be an electrically redundant motor. The operation-side motor 11 and the steering-side motor 12 may also be motors that are not electrically redundant. In the illustrated example, the operation-side motor 11 and the steering-side motor 12 are motors that are not electrically redundant. The steering control device 7 controls operation of the operation-side motor 11 and the steering-side motor 12 through supply of electric power to the operation-side motor 11 and the steering-side motor 12. Electric power supplied to the operation-side motor 11 and electric power supplied to the steering-side motor 12 are supplied from an external power supply 13 mounted on the vehicle via the vehicle power supply device 1.

More specifically, the steering control device 7 includes an operation-side control unit 21 and a steering-side control unit 22. The operation-side control unit 21 controls operation of the operation-side motor 11. The steering-side control unit 22 controls operation of the steering-side motor 12. The operation-side control unit 21 and the steering-side control unit 22 are communicatively connected to each other via a local network 23 such as serial communication. The steering control device 7 of the present embodiment is a single control device including the operation-side control unit 21 and the steering-side control unit 22. In another embodiment, the steering control device 7 may include a control device including the operation-side control unit 21, and another control device including the steering-side control unit 22 and mechanically separated from the former control device.

The operation-side control unit 21 includes an operation-side drive circuit 24 and an operation-side control circuit 25 that controls the operation-side drive circuit 24. In a configuration in which the operation-side motor 11 is electrically redundant, the operation-side control unit 21 may include a plurality of operation-side drive circuits 24 corresponding to the plurality of coil groups. In this case, the operation-side control unit 21 may include a plurality of operation-side control circuits corresponding to the plurality of operation-side drive circuits 24, or may include a single operation-side control circuit.

The operation-side drive circuit 24 is a typical PWM inverter including a plurality of switching elements such as FETs and IGBTs. The operation-side control circuit 25 controls operation of the operation-side drive circuit 24 by outputting control signals that specify the duty cycles of the respective switching elements. That is, the control signal is a gate ON/OFF signal that specifies the ON/OFF state. The duty cycle refers to the ratio of the ON time of the switching element to the pulse period.

The operation-side control circuit 25 can be configured by (1) one or more processors that operate in accordance with a computer program (software), (2) one or more dedicated hardware circuits such as application-specific integrated circuits (ASICs) that execute at least part of various processes, or (3) a combination thereof. The processor includes a central processing unit (CPU) and a memory such as RAM and ROM, and the memory stores program code or commands configured to cause the CPU to execute processes. The memory, that is, a non-transitory computer-readable medium, includes any available medium that is accessible by a general-purpose or dedicated computer. Various controls by the operation-side control circuit 25 are executed by the CPU executing a program stored in the memory at predetermined operation cycles.

The operation-side control circuit 25 calculates a reaction-force control amount serving as a target value of the operation reaction force, based on detection results of various sensors, not shown, and information obtained from the steering-side control unit 22 via the local network 23. The operation-side control circuit 25 then generates control signals having respective duty cycles in accordance with the reaction-force control amount. The operation-side control circuit 25 thus controls supply of electric power to the operation-side motor 11.

The steering-side control unit 22 is configured similarly to the operation-side control unit 21. That is, the steering-side control unit 22 includes a steering-side drive circuit 26 and a steering-side control circuit 27 that controls the steering-side drive circuit 26.

The steering-side control circuit 27 calculates a steering control amount serving as a target value of the steering force, based on detection results of various sensors and information obtained from the operation-side control unit 21 via the local network 23. The steering-side control circuit 27 then generates control signals having respective duty cycles in accordance with the steering control amount. The steering-side control circuit 27 thus controls supply of electric power to the steering-side motor 12.

### (Power Supply Path)

The steering control device 7 is connected to the external power supply 13 via the vehicle power supply device 1. Accordingly, electric power is supplied from the external power supply 13 to the steering control device 7 via the vehicle power supply device 1. The external power supply 13 is, for example, a secondary battery. The external power supply 13 can be charged by a generator such as an alternator, not shown.

More specifically, the steering control device 7 is connected to the external power supply 13 via a drive power supply line Lp and a control power supply line Lc. The control power supply line Lc branches from a connection point P0 of the drive power supply line Lp. The vehicle power supply device 1 is provided across both the drive power supply line Lp and the control power supply line Lc. The drive power supply line Lp includes an upstream-side drive power supply line Lpu that is a power supply path upstream of the vehicle power supply device 1, and a downstream-side drive power supply line Lpd that is a power supply path downstream of the vehicle power supply device 1. The control power supply line Lc includes an upstream-side control power supply line Lcu that is a power supply path upstream of the vehicle power supply device 1, and a downstream-side control power supply line Lcd that is a power supply path downstream of the vehicle power supply device 1.

A control relay 32 that operates in association with a start switch 31 for the vehicle is provided in the upstream-side control power supply line Lcu. The start switch 31 is a switch operated to start or stop a traction drive source of the vehicle, and may be, for example, an ignition switch or a power switch. When the start switch 31 is operated to turn on, the control relay 32 is switched to an ON state, thereby establishing conduction of the control power supply line Lc. When the start switch 31 is operated to turn off, the control relay 32 is switched to an OFF state, thereby interrupting the control power supply line Lc.

The downstream-side drive power supply line Lpd branches downstream and is connected to the operation-side drive circuit 24 and the steering-side drive circuit 26. The downstream-side control power supply line Lcd branches downstream and is connected to the operation-side control circuit 25 and the steering-side control circuit 27.

### (Vehicle Power Supply Device 1)

A start signal Sig indicating an ON/OFF state of the start switch 31 and an external power supply voltage signal Sve indicating an external power supply voltage Vex, namely a voltage of the external power supply 13, are input to the vehicle power supply device 1. The external power supply voltage signal Sve is output from a voltage sensor 33. When the external power supply voltage Vex of the external power supply 13 is greater than or equal to a drop determination threshold Vthlo, the vehicle power supply device 1 determines that the external power supply 13 is normal and supplies electric power of the external power supply 13 to the steering device 2. On the other hand, when the external power supply voltage Vex is lower than the drop determination threshold Vthlo, the vehicle power supply device 1 supplies electric power of an auxiliary power supply 41, which will be described later, to the steering device 2.

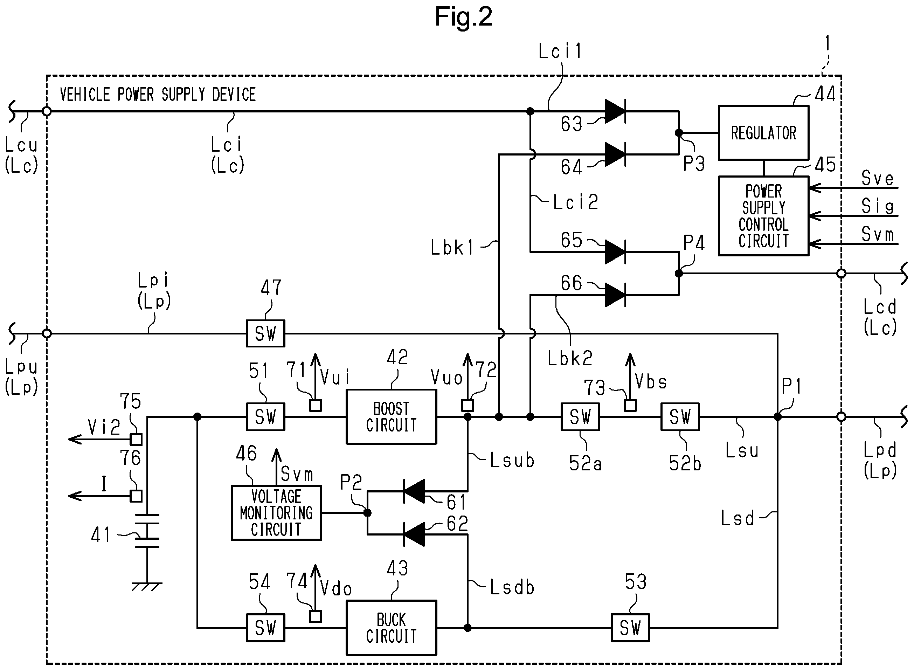

More specifically, as shown in FIG. 2, the vehicle power supply device 1 includes the auxiliary power supply 41, a boost circuit 42, a buck circuit 43, a regulator 44, a power supply control circuit 45, a voltage monitoring circuit 46, electric wires that interconnect these circuit components, and a plurality of switching elements.

The electric wires of the vehicle power supply device 1 include an internal drive power supply line Lpi that constitutes a part of the drive power supply line Lp, and an internal control power supply line Lci that constitutes a part of the control power supply line Lc. The internal drive power supply line Lpi is provided between the upstream-side drive power supply line Lpu and the downstream-side drive power supply line Lpd. A drive relay 47 is provided in the internal drive power supply line Lpi. The internal control power supply line Lci is provided between the upstream-side control power supply line Lcu and the downstream-side control power supply line Lcd.

The electric wires of the vehicle power supply device 1 include a discharge line Lsu that branches from the internal drive power supply line Lpi and extends therefrom, and a charge line Lsd that branches from the internal drive power supply line Lpi and is connected in parallel with the discharge line Lsu. Both the discharge line Lsu and the charge line Lsd branch from a connection point P1 located downstream of the drive relay 47 in the internal drive power supply line Lpi. The discharge line Lsu and the charge line Lsd merge with each other on a side opposite to the connection point P1.

The auxiliary power supply 41 is, for example, a capacitor. The auxiliary power supply 41 can be charged and discharged. The auxiliary power supply 41 of the present embodiment includes two capacitors (cells) connected in series. The auxiliary power supply 41 is connected to the internal drive power supply line Lpi via the discharge line Lsu and the charge line Lsd.

The boost circuit 42 is provided in the discharge line Lsu. The boost circuit 42 boosts the voltage of the auxiliary power supply 41 (that is, a second voltage Vi2, which will be described later) and outputs the resulting voltage. A first switching element 51 is provided on the input side of the boost circuit 42 in the discharge line Lsu, that is, on the side where the auxiliary power supply 41 is connected. Two second switching elements 52a, 52b connected in series are provided on the output side of the boost circuit 42 in the discharge line Lsu, that is, on the side where the connection point P1 is located. That is, the first switching element 51, the boost circuit 42, and the second switching elements 52a, 52b are provided in the discharge line Lsu in this order from the auxiliary power supply 41 toward the connection point P1. The boost circuit 42 is, for example, a DC-DC converter. The boost circuit 42 includes a boost control circuit, not shown. The boost circuit 42 boosts an input voltage to a preset boost voltage Vsu by adjusting the ratio at which the boost control circuit turns on and off internal switching elements, and outputs the boost voltage Vsu. Operation and stop of the boost control circuit, that is, operation and stop of the boost circuit 42, are controlled by the power supply control circuit 45.

Specifically, the boost control circuit of the present embodiment is configured to operate based on the voltage between the first switching element 51 and the boost circuit 42 (that is, a boost-input-side voltage Vui, which will be described later). The power supply control circuit 45 indirectly controls operation and stop of the boost control circuit by switching the ON/OFF state of the first switching element 51. In another embodiment, the power supply control circuit 45 may directly control operation and stop of the boost control circuit.

The buck circuit 43 is provided in the charge line Lsd. The buck circuit 43 steps down the external power supply voltage Vex of the external power supply 13 and outputs the resulting voltage. A third switching element 53 is provided on the input side of the buck circuit 43 in the charge line Lsd, that is, on the side where the connection point P1 is located. A fourth switching element 54 is provided on the output side of the buck circuit 43 in the charge line Lsd, that is, on the side where the auxiliary power supply 41 is connected. That is, the third switching element 53, the buck circuit 43, and the fourth switching element 54 are provided in the charge line Lsd in this order from the connection point P1 toward the auxiliary power supply 41. The buck circuit 43 is, for example, a DC-DC converter. The buck circuit 43 includes a buck control circuit, not shown. The buck circuit 43 steps down an input voltage to a preset buck voltage Vsd by adjusting the ratio at which the buck control circuit turns on and off internal switching elements, and outputs the buck voltage Vsd. Operation and stop of the buck control circuit, that is, operation and stop of the buck circuit 43, are controlled by the power supply control circuit 45.

Specifically, the power supply control circuit 45 of the present embodiment directly controls operation and stop of the buck control circuit. In another embodiment, the power supply control circuit 45 may indirectly control operation and stop of the boost control circuit by, for example, switching the ON/OFF state of the third switching element 53.

The drive relay 47, the first switching element 51, the second switching elements 52a, 52b, the third switching element 53, and the fourth switching element 54 are semiconductor switches such as FETs or IGBTs. The ON/OFF states of these switching elements are controlled by the power supply control circuit 45. For convenience of illustration, lines indicating signals output from the power supply control circuit 45 to each circuit component are not shown in the drawings.

The electric wires of the vehicle power supply device 1 include a discharge branch line Lsub that branches from the discharge line Lsu, and a charge branch line Lsdb that branches from the charge line Lsd. The discharge branch line Lsub branches from between the boost circuit 42 and the second switching element 52a in the discharge line Lsu. The charge branch line Lsdb branches from between the buck circuit 43 and the third switching element 53 in the charge line Lsd. The discharge branch line Lsub and the charge branch line Lsdb are connected to each other at a connection point P2 and then connected to the voltage monitoring circuit 46.

Diodes 61, 62 are provided upstream of the connection point P2 in the discharge branch line Lsub and the charge branch line Lsdb, respectively. The diodes 61, 62 allow the flow of current from the upstream side to the downstream side and restrict the flow of current from the downstream side to the upstream side. The diodes 61, 62 constitute a selection circuit that supplies either the voltage of the discharge line Lsu or the voltage of the charge line Lsd, whichever is greater, to the voltage monitoring circuit 46.

The voltage monitoring circuit 46 detects the voltage of the auxiliary power supply 41. The hardware configuration of the voltage monitoring circuit 46 may be the same as that of the operation-side control circuit 25. The voltage monitoring circuit 46 of the present embodiment detects a first voltage Vi1 between two capacitors connected in series in the auxiliary power supply 41. While electric power is being supplied, the voltage monitoring circuit 46 outputs to the power supply control circuit 45 a voltage monitoring signal Svm indicating the detected first voltage Vi1. When the supply of electric power is stopped, the voltage monitoring circuit 46 stops outputting the voltage monitoring signal Svm. For convenience of illustration, part of the lines indicating signals output from the voltage monitoring circuit 46 to the power supply control circuit 45 are omitted.

The internal control power supply line Lci branches downstream into a first internal control power supply line Lci1 and a second internal control power supply line Lci2. The first internal control power supply line Lci1 is connected to the regulator 44. The second internal control power supply line Lci2 is connected to the operation-side control circuit 25 and the steering-side control circuit 27 via the downstream-side control power supply line Lcd.

The electric wires of the vehicle power supply device 1 include a first backup line Lbk1 and a second backup line Lbk2 that branch from the discharge line Lsu. The first backup line Lbk1 and the second backup line Lbk2 branch from between the boost circuit 42 and the second switching element 52a in the discharge line Lsu. The first backup line Lbk1 is connected to the first internal control power supply line Lci1 at a connection point P3. The second backup line Lbk2 is connected to the second internal control power supply line Lci2 at a connection point P4.

Diodes 63, 64 are provided upstream of the connection point P3 in the first internal control power supply line Lci1 and the first backup line Lbk1, respectively. The diodes 63, 64 allow the flow of current from the upstream side to the downstream side and restrict the flow of current from the downstream side to the upstream side. The diodes 63, 64 constitute a selection circuit that supplies either the voltage supplied from the external power supply 13 or the voltage supplied from the auxiliary power supply 41, whichever is greater, to the regulator 44.

Diodes 65, 66 are provided upstream of the connection point P4 in the second internal control power supply line Lci2 and the second backup line Lbk2, respectively. The diodes 65, 66 allow the flow of current from the upstream side to the downstream side and restrict the flow of current from the downstream side to the upstream side. The diodes 65, 66 constitute a selection circuit that supplies either the voltage supplied from the external power supply 13 or the voltage supplied from the auxiliary power supply 41, whichever is greater, to the operation-side control circuit 25 and the steering-side control circuit 27.

The regulator 44 adjusts an input voltage to a preset voltage for the control circuits. The power supply control circuit 45 is connected to the regulator 44 and operates based on electric power supplied from the regulator 44. The hardware configuration of the power supply control circuit 45 may be the same as that of the operation-side control circuit 25.

In addition to the voltage monitoring signal Svm output from the voltage monitoring circuit 46, the start signal Sig and the external power supply voltage signal Sve are also input to the power supply control circuit 45. Voltage sensors 71 to 74 that detect the voltages on the discharge line Lsu and the charge line Lsd are connected to the power supply control circuit 45. Specifically, a voltage sensor 71 that detects a boost-input-side voltage Vui between the first switching element 51 and the boost circuit 42, a voltage sensor 72 that detects a boost-output-side voltage Vuo between the boost circuit 42 and the second switching element 52a, and a voltage sensor 73 that detects an inter-switching-element voltage Vbs between the second switching element 52a and the second switching element 52b are provided on the discharge line Lsu. A voltage sensor 74 that detects a buck-output-side voltage Vdo between the buck circuit 43 and the fourth switching element 54 is provided on the charge line Lsd. Further, a voltage sensor 75 that detects a second voltage Vi2 on the high-potential side of the auxiliary power supply 41, and a current sensor 76 that detects a current I flowing through the auxiliary power supply 41, are connected to the power supply control circuit 45 of the present embodiment. For convenience of illustration, part of the lines indicating signals output from the voltage sensors 71 to 75 and the current sensor 76 to the power supply control circuit 45 are omitted. The power supply control circuit 45 executes various processes (controls) based on the various input signals and the detected voltages and currents.

Next, various processes executed by the power supply control circuit 45 will be described. When the start switch 31 is operated to turn on and thus the control relay 32 is switched to an ON state, electric power of the external power supply 13 is supplied to the power supply control circuit 45. Accordingly, operation of the power supply control circuit 45 is started.

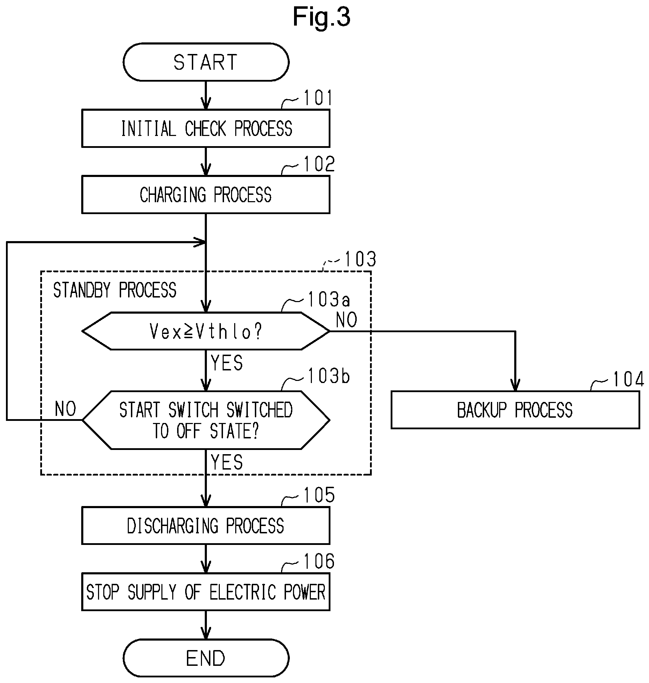

As shown in FIG. 3, when the power supply control circuit 45 starts its operation, it controls the drive relay 47 to turn on, thereby supplying electric power of the external power supply 13 to the operation-side drive circuit 24 and the steering-side drive circuit 26, and executes an initial check process (step 101).

Next, when the initial check process is completed, the power supply control circuit 45 executes a charging process (step 102). The charging process is a process of charging the auxiliary power supply 41 until the voltage of the auxiliary power supply 41, more specifically the second voltage Vi2, reaches a standby voltage Vsb.

When the charging process is completed, the power supply control circuit 45 supplies electric power of the external power supply 13 to the steering control device 7, while executing a standby process (step 103). The standby process includes determining whether the external power supply voltage Vex of the external power supply 13 has decreased (step 103a), and determining whether the start switch 31 has been switched to an OFF state (step 103b). Whether the external power supply voltage Vex has decreased is determined based on whether the external power supply voltage Vex is greater than or equal to the drop determination threshold Vthlo.

When the external power supply voltage Vex of the external power supply 13 has decreased during execution of the standby process, that is, when the external power supply voltage Vex is lower than the drop determination threshold Vthlo (step 103a: NO), the power supply control circuit 45 executes a backup process (step 104). The backup process is a process of stopping supply of electric power from the external power supply 13 to the steering control device 7, and supplying electric power of the auxiliary power supply 41 to the steering control device 7.

When the start switch 31 is operated to turn off during execution of the standby process (step 103b: YES), the power supply control circuit 45 executes a discharging process (step 105). The discharging process is a process of discharging the auxiliary power supply 41 until the voltage of the auxiliary power supply 41, more specifically the second voltage Vi2, reaches a predetermined voltage Vst. The predetermined voltage Vst is a voltage such that, in abnormality determination of the auxiliary power supply 41 described later, when the internal resistance of the auxiliary power supply 41 is normal, a current I flowing through the auxiliary power supply 41 becomes greater than or equal to a current threshold Ith based on the buck voltage Vsd. The predetermined voltage Vst is set to a value lower than the standby voltage Vsb.

When the discharging process is completed, the power supply control circuit 45 stops supply of electric power to the power supply control circuit 45 itself (step 106). When, during execution of the standby process, the external power supply voltage Vex of the external power supply 13 is greater than or equal to the drop determination threshold Vthlo (step 103a: YES) and the start switch 31 is not operated to turn off (step 103b: NO), the processes of steps 103a, 103b are repeated.

Specifically, in the initial check process, one or more abnormality determinations for detecting an abnormality of the vehicle power supply device 1 are executed. The one or more abnormality determinations include determining whether short-circuit failures have occurred in the second switching elements 52a, 52b, the third switching element 53, and the fourth switching element 54. The one or more abnormality determinations also include determining whether an abnormality has occurred in the auxiliary power supply 41. When the power supply control circuit 45 determines that an abnormality has occurred in the vehicle power supply device 1, it may, for example, display the occurrence of the abnormality on an indicator, not shown.

A short-circuit failure of the second switching element 52a is determined based on whether an inter-switching-element voltage Vbs is greater than or equal to a short-circuit determination threshold Vthsc, in a state where the first switching element 51 is controlled to turn on, the boost circuit 42 is operated, and the second switching elements 52a, 52b are controlled to turn off. The short-circuit determination threshold Vthsc is a value for detecting a short circuit of a switching element and is set to an appropriate value greater than zero. When a short-circuit failure has occurred in the second switching element 52a, the inter-switching-element voltage Vbs becomes large based on the boost voltage Vsu output from the boost circuit 42, and therefore a short-circuit failure of the second switching element 52a can be determined. A short-circuit failure of the second switching element 52b is determined based on whether the inter-switching-element voltage Vbs is greater than or equal to the short-circuit determination threshold Vthsc, in a state where the second switching elements 52a, 52b are controlled to turn off. When a short-circuit failure has occurred in the second switching element 52b, the inter-switching-element voltage Vbs becomes large based on the external power supply voltage Vex supplied from the external power supply 13, and therefore a short-circuit failure of the second switching element 52b can be determined.

A short-circuit failure of the third switching element 53 is determined based on whether a voltage monitoring signal Svm is output from the voltage monitoring circuit 46, in a state where the boost circuit 42 is not operated and the second switching elements 52a, 52b and the third switching element 53 are controlled to turn off. This determination is executed after a determination has been made that no short-circuit failure has occurred in the second switching elements 52a, 52b. Accordingly, when no short-circuit failure has occurred in the third switching element 53, no electric power is supplied to the voltage monitoring circuit 46 and no voltage monitoring signal Svm is output. Therefore, when the voltage monitoring signal Svm is output, a short-circuit failure of the third switching element 53 can be determined.

A short-circuit failure of the fourth switching element 54 is determined based on whether a buck-output-side voltage Vdo is greater than or equal to the short-circuit determination threshold Vthsc, in a state where the third switching element 53 and the fourth switching element 54 are controlled to turn off. When a short-circuit failure has occurred in the fourth switching element 54, the buck-output-side voltage Vdo becomes large based on the second voltage Vi2 supplied from the auxiliary power supply 41, and therefore a short-circuit failure of the fourth switching element 54 can be determined.

Abnormality determination of the auxiliary power supply 41 includes determining whether the internal resistance of the auxiliary power supply 41 has become excessive. This determination is performed based on the current I flowing into the auxiliary power supply 41, that is, the charging current of the auxiliary power supply 41, in a state where the first switching element 51, the third switching element 53, and the fourth switching element 54 are controlled to turn on and the buck circuit 43 is operated. The power supply control circuit 45 can determine that the internal resistance of the auxiliary power supply 41 has become excessive when the current I is less than the current threshold Ith. Abnormality determination of the auxiliary power supply 41 includes determining whether the auxiliary power supply 41 is in an overdischarged state. Abnormality determination of the auxiliary power supply 41 is executed based on the first voltage Vi1 or the second voltage Vi2. The power supply control circuit 45 can determine that overdischarge of the auxiliary power supply 41 has occurred when the first voltage Vi1 is less than a first voltage threshold Vth1, or when the second voltage Vi2 is less than a second voltage threshold Vth2.

In the charging process and the standby process, the power supply control circuit 45 controls the first switching element 51, the third switching element 53, and the fourth switching element 54 to turn on, and controls the second switching elements 52a, 52b to turn off. The power supply control circuit 45 also operates the boost circuit 42 and the buck circuit 43. Accordingly, the auxiliary power supply 41 is charged based on the buck voltage Vsd output from the buck circuit 43.

In the backup process, the power supply control circuit 45 controls the first switching element 51 and the second switching elements 52a, 52b to turn on, and controls the drive relay 47, the third switching element 53, and the fourth switching element 54 to turn off. The power supply control circuit 45 also continues operating the boost circuit 42 and stops the buck circuit 43. Accordingly, the voltage output from the boost circuit 42 is supplied to the steering control device 7. As described above, the boost circuit 42 is also operated during execution of the standby process. Therefore, when the second switching elements 52a, 52b are switched to an ON state by execution of the backup process, electric power is immediately supplied from the auxiliary power supply 41 to the steering control device 7.

The power supply control circuit 45 of the present embodiment continues the backup process to the extent possible based on the electric power of the auxiliary power supply 41, and stops when the electric power of the auxiliary power supply 41 is exhausted. In another embodiment, the power supply control circuit 45 may determine whether the external power supply voltage Vex of the external power supply 13 has become greater than or equal to the drop-determination threshold Vthlo during execution of the backup process. In such an embodiment, when the external power supply voltage Vex has become greater than or equal to the drop-determination threshold Vthlo, the power supply control circuit 45 returns to the standby process.

In the discharging process, the power supply control circuit 45 controls the first switching element 51 to turn on, and controls the second switching elements 52a, 52b, the third switching element 53, and the fourth switching element 54 to turn off. The power supply control circuit 45 then discharges the electric power of the auxiliary power supply 41 by operating the boost circuit 42 to continue supplying electric power to the power supply control circuit 45 itself. After the discharge is continued until the voltage of the auxiliary power supply 41 reaches the predetermined voltage Vst, the power supply control circuit 45 controls the first switching element 51 to turn off, and stops the operation of the boost circuit 42. As a result, electric power is no longer supplied to the power supply control circuit 45, and the power supply control circuit 45 stops.

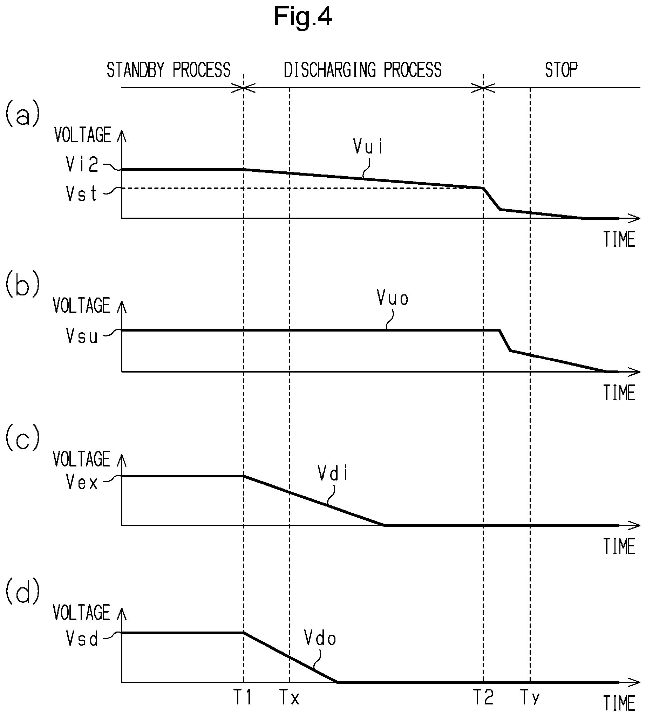

Next, changes in the voltages of the discharge line Lsu and the charge line Lsd before and after execution of the discharging process will be described with reference to FIG. 4. FIG. 4 illustrates time variations of the boost-input-side voltage Vui, the boost-output-side voltage Vuo, the buck-output-side voltage Vdo, and the buck-input-side voltage Vdi between the buck circuit 43 and the third switching element 53.

First, voltages during execution of the standby process will be described. As shown in FIG. 4(a), the boost input-side voltage Vui becomes the second voltage Vi2 of the auxiliary power supply 41. As shown in FIG. 4(b), the boost output-side voltage Vuo becomes the boost voltage Vsu output from the boost circuit 42. As shown in FIG. 4(c), the buck input-side voltage Vdi becomes the external power supply voltage Vex of the external power supply 13. As shown in FIG. 4(d), the buck output-side voltage Vdo becomes the buck voltage Vsd output from the buck circuit 43.

As shown in FIG. 4, the power supply control circuit 45 starts the discharging process at, for example, time T1. Accordingly, as shown in FIG. 4(a), the boost-input-side voltage Vui gradually decreases as the electric charge of the auxiliary power supply 41 is discharged. The boost circuit 42 boosts an input voltage to the boost voltage Vsu and outputs it, even when the input voltage decreases to some extent. Therefore, as shown in FIG. 4(b), the boost-output-side voltage Vuo is maintained at the boost voltage Vsu even when the boost-input-side voltage Vui decreases. As shown in FIG. 4(c), the buck-input-side voltage Vdi decreases and becomes zero as the third switching element 53 is switched to an OFF state. As shown in FIG. 4(d), the buck-output-side voltage Vdo decreases and becomes zero as the buck-input-side voltage Vdi decreases. The buck-input-side voltage Vdi and the buck-output-side voltage Vdo normally decrease faster than the boost-input-side voltage Vui and the boost-output-side voltage Vuo.

Subsequently, when the voltage of the auxiliary power supply 41 becomes the predetermined voltage Vst at time T2, the power supply control circuit 45 completes the discharging process and switches the first switching element 51 to an OFF state. Accordingly, as shown in FIG. 4(a), the boost-input-side voltage Vui decreases and becomes zero. As shown in FIG. 4(b), the boost-output-side voltage Vuo decreases and becomes zero as the boost-input-side voltage Vui decreases. Normally, the period from time T1 to time T2 is, for example, about several tens of minutes, and the period from time T2 to the time at which the boost-output-side voltage Vuo becomes zero is, for example, about several minutes.

As can be understood from such voltage changes, when the start switch 31 is switched to an ON state between the start of the discharging process and the time at which the boost-output-side voltage Vuo becomes zero, electric charge may remain in the discharge line Lsu and the charge line Lsd, and a voltage may be present. Therefore, for the determination of short-circuit failures of the third switching element 53 and the fourth switching element 54, there is a possibility of erroneously determining that short-circuit failures have occurred in these switching elements even though no short-circuit failures have actually occurred.

Specifically, for example, due to the electric charge remaining in the discharge line Lsu, the boost-output-side voltage Vuo may become greater than zero, and the voltage monitoring circuit 46 may be operated based on this boost-output-side voltage Vuo to output a voltage monitoring signal Svm. As a result, in the determination of a short-circuit failure of the third switching element 53, even if a short-circuit failure has not occurred in the third switching element 53, a voltage monitoring signal Svm is output, and thus a short-circuit failure may be erroneously determined to have occurred in the third switching element 53. Further, for example, due to the electric charge remaining in the charge line Lsd, the buck-output-side voltage Vdo may become greater than the short-circuit determination threshold Vthsc. As a result, in the determination of a short-circuit failure of the fourth switching element 54, even if a short-circuit failure has not occurred in the fourth switching element 54, a short-circuit failure may be erroneously determined to have occurred in the fourth switching element 54.

On the other hand, for the abnormality determination of the auxiliary power supply 41 and the determination of short-circuit failures of the second switching elements 52a, 52b, even if a voltage is present in the discharge line Lsu and the charge line Lsd when the start switch 31 is switched to an ON state, a short-circuit failure is not erroneously determined to have occurred. Similarly, for the abnormality determination of the auxiliary power supply 41, even if a voltage is present in the discharge line Lsu and the charge line Lsd when the start switch 31 is switched to an ON state, an abnormality in the auxiliary power supply 41 is not erroneously determined to have occurred.

That is, the determination of short-circuit failures of the third switching element 53 and the fourth switching element 54 corresponds to a predetermined abnormality determination that is affected by voltages remaining in at least one of the discharge line Lsu and the charge line Lsd when the start switch 31 is switched to an ON state, among the one or more abnormality determinations. The predetermined abnormality determination can also be said to be an abnormality determination in which the determination results change when a voltage remains at least one of the discharge line Lsu and the charge line Lsd. The abnormality determination of the auxiliary power supply 41 and the determination of short-circuit failures of the second switching elements 52a, 52b correspond to abnormality determinations other than the predetermined abnormality determination, among the one or more abnormality determinations.

Accordingly, before executing the one or more abnormality determinations, the power supply control circuit 45 performs a restart determination as to whether at least one of the boost-input-side voltage Vui and the boost-output-side voltage Vuo is greater than or equal to a residual voltage threshold Vthre. When at least one of the boost-input-side voltage Vui and the boost-output-side voltage Vuo is greater than or equal to the residual voltage threshold Vthre, the power supply control circuit 45 does not determine that an abnormality has occurred in the vehicle power supply device 1, based on the predetermined abnormality determination. The residual voltage threshold Vthre is a value at which, for example, the boost-input-side voltage Vui and the boost-output-side voltage Vuo can be regarded as zero, and is set to a value slightly greater than zero in consideration of influences such as noise.

In the power supply control circuit 45 of the present embodiment, the conditions under which short-circuit failures of the third switching element 53 and the fourth switching element 54 are determined to have occurred include a condition that at least one of the boost-input-side voltage Vui and the boost-output-side voltage Vuo is not greater than or equal to the residual voltage threshold Vthre, that is, that the boost-input-side voltage Vui and the boost-output-side voltage Vuo are both less than the residual voltage threshold Vthre. Specifically, in the determination of a short-circuit failure of the third switching element 53, the power supply control circuit 45 determines that a short-circuit failure has occurred in the third switching element 53 when the boost-input-side voltage Vui and the boost-output-side voltage Vuo are both less than the residual voltage threshold Vthre and a voltage monitoring signal Svm is output from the voltage monitoring circuit 46. In the determination of a short-circuit failure of the fourth switching element 54, the power supply control circuit 45 determines that a short-circuit failure has occurred in the fourth switching element 54 when the boost-input-side voltage Vui and the boost-output-side voltage Vuo are both less than the residual voltage threshold Vthre and the buck-output-side voltage Vdo is greater than or equal to the short-circuit determination threshold Vthsc. Accordingly, when at least one of the boost-input-side voltage Vui and the boost-output-side voltage Vuo is greater than or equal to the residual voltage threshold Vthre, short-circuit failures of the third switching element 53 and the fourth switching element 54 are not determined to have occurred.

On the other hand, in the power supply control circuit 45, the conditions under which short-circuit failures of the second switching elements 52a, 52b are determined to have occurred and an abnormality of the auxiliary power supply 41 is determined to have occurred does not include the condition that at least one of the boost-input-side voltage Vui and the boost-output-side voltage Vuo is not greater than or equal to the residual voltage threshold Vthre. Specifically, in the determination of short-circuit failures of the second switching elements 52a, 52b, the power supply control circuit 45 determines that short-circuit failures have occurred in the second switching elements 52a, 52b when the inter-switching-element voltage Vbs is greater than or equal to the short-circuit determination threshold Vthsc. Further, the power supply control circuit 45 determines that the internal resistance of the auxiliary power supply 41 has become excessive when the current I is less than the current threshold Ith. The power supply control circuit 45 determines that overdischarge of the auxiliary power supply 41 has occurred when the first voltage Vi1 is less than the first voltage threshold Vth1 or when the second voltage Vi2 is less than the second voltage threshold Vth2.

Next, the functions and effects of the present embodiment will be described.
(1) Consider a case where the start switch 31 is switched again to an ON state while the discharging process is being executed, for example, at time Tx in FIG. 4. In this case, electric charge may remain in the discharge line Lsu and the charge line Lsd, and the voltages of these lines may not become zero. Therefore, if the predetermined abnormality determination is executed in the abnormality determination for the vehicle power supply device 1, there is a possibility of erroneously determining that an abnormality has occurred even though no abnormality has actually occurred. In this regard, in the present embodiment, when at least one of the boost-input-side voltage Vui and the boost-output-side voltage Vuo is greater than or equal to the residual voltage threshold Vthre, the power supply control circuit 45 does not determine that an abnormality has occurred in the vehicle power supply device 1, based on the predetermined abnormality determination. Accordingly, it is possible to reduce the possibility of erroneously determining that an abnormality has occurred even though no abnormality has actually occurred.
(2) The power supply control circuit 45 stops the supply of electric power to the power supply control circuit 45 when the second voltage Vi2 of the auxiliary power supply 41 reaches the predetermined voltage Vst as a result of the execution of the discharging process. Therefore, power consumption of the vehicle power supply device 1 can be reduced, compared with a case where electric power continues to be supplied to the power supply control circuit 45 even after completion of the discharging process.

Here, consider a case where, after the start switch 31 is switched to an OFF state, the start switch 31 is switched again to an ON state while electric power is being supplied to the power supply control circuit 45, that is, while the power supply control circuit 45 is executing the discharging process. In this case, even without performing the restart determination, the power supply control circuit 45 can determine that electric charge remains in the discharge line Lsu and the charge line Lsd based on whether the start switch 31 was switched to an ON state during the discharging process. Therefore, as a reference example, it is possible to conceive a configuration in which, when the start switch 31 is switched again to an ON state while electric power continues to be supplied to the power supply control circuit 45, an abnormality is not determined to have occurred in the vehicle power supply device 1 based on the predetermined abnormality determination.

However, even if the supply of electric power to the power supply control circuit 45 is stopped after the second voltage Vi2 of the auxiliary power supply 41 reaches the predetermined voltage Vst, electric charge remains in the discharge line Lsu for a while. Therefore, in the above reference example, there still remains the possibility of an erroneous determination when the start switch 31 is switched again to an ON state after supply of electric power to the power supply control circuit 45 has been stopped and while electric charge still remains in the discharge line Lsu, for example, at time Ty in FIG. 4. Accordingly, performing the restart determination as in the present embodiment can more reliably reduce the possibility of an erroneous determination while achieving reduced power consumption of the vehicle power supply device 1.

(3) The power supply control circuit 45 determines that a short-circuit failure has occurred in the fourth switching element 54 when the buck-output-side voltage Vdo is greater than or equal to the short-circuit determination threshold Vthsc, in a state where the first switching element 51, the second switching elements 52a, 52b, the third switching element 53, and the fourth switching element 54 are controlled such that no voltage is generated on the output side of the buck circuit 43 in the charge line Lsd. Accordingly, the short-circuit failure of the fourth switching element 54 can be easily determined.

(4) The vehicle power supply device 1 includes the voltage monitoring circuit 46 configured to detect the first voltage Vi1 of the auxiliary power supply 41 and to output a voltage monitoring signal Svm indicating the first voltage Vi1 to the power supply control circuit 45. The voltage monitoring circuit 46 operates based on either the boost-output-side voltage Vuo or the buck-input-side voltage Vdi, whichever is higher. The power supply control circuit 45 determines that a short-circuit failure has occurred in the third switching element 53 when the voltage monitoring signal Svm is output from the voltage monitoring circuit 46, in a state where the first switching element 51, the second switching elements 52a, 52b, the third switching element 53, and the fourth switching element 54 are controlled such that no voltage is generated on the output side of the boost circuit 42 and on the input side of the buck circuit 43. Accordingly, the short-circuit failure of the third switching element 53 can be determined without detecting the buck-input-side voltage Vdi.

The present embodiment can be modified as follows. The present embodiment and the following modifications may be combined as long as no technical contradiction occurs.
- In the above embodiment, the auxiliary power supply 41 may be a single capacitor or may include three or more capacitors connected in series.
   - In the above embodiment, the voltage monitoring circuit 46 may detect a voltage other than the first voltage Vi1 of the auxiliary power supply 41, for example, the second voltage Vi2.
- In the above embodiment, the determination of a short-circuit failure of the third switching element 53 is made based on the presence or absence of input of the voltage monitoring signal Svm from the voltage monitoring circuit 46. However, the present disclosure is not limited to this. For example, the power supply control circuit 45 may detect the buck-input-side voltage Vdi and determine a short-circuit failure of the third switching element 53 based on the detected buck-input-side voltage Vdi.
   - In the above embodiment, the predetermined abnormality determination includes the determinations of short-circuit failures of the third switching element 53 and the fourth switching element 54. However, the predetermined abnormality determination may include other determinations in addition to or instead of these determinations. The other determinations may be, for example, a determination of a short-circuit failure of a switching element inside the buck circuit 43. A short-circuit failure of a switching element inside the buck circuit 43 can be determined based on, for example, whether the buck-output-side voltage Vdo is greater than or equal to the short-circuit determination threshold Vthsc, in a state where the third switching element 53 is controlled to turn on and the fourth switching element 54 is controlled to turn off while the buck circuit 43 is stopped. The abnormality determinations other than the predetermined abnormality determination may include appropriate determinations.
   - In the above embodiment, two second switching elements 52a, 52b are provided on the output side of the boost circuit 42 in the discharge line Lsu. However, the present disclosure is not limited to this. A single second switching element may instead be provided on the output side of the boost circuit 42 in the discharge line Lsu. In this case, the determination of a short-circuit failure of the single second switching element can be made based on the boost-output-side voltage Vuo, and such a determination may be the predetermined abnormality determination.
   - In the above embodiment, the conditions under which an abnormality is determined to have occurred by the predetermined abnormality determination includes a condition that at least one of the boost-input-side voltage Vui and the boost-output-side voltage Vuo is less than the residual voltage threshold Vthre. However, the present invention is not limited to this. The power supply control circuit 45 may be configured such that, when at least one of the boost-input-side voltage Vui and the boost-output-side voltage Vuo is greater than or equal to the residual voltage threshold Vthre, the predetermined abnormality determination itself is not executed, that is, the predetermined abnormality determination is skipped.
   - In the above embodiment, the power supply control circuit 45 is configured such that, when at least one of the boost-input-side voltage Vui and the boost-output-side voltage Vuo is greater than or equal to the residual voltage threshold Vthre, an abnormality is not determined to have occurred in the vehicle power supply device 1 by the predetermined abnormality determination. However, the present disclosure is not limited to this. The power supply control circuit 45 may be configured such that, when the boost-input-side voltage Vui or the boost-output-side voltage Vuo is greater than or equal to the residual voltage threshold Vthre, an abnormality is not determined to have occurred in the vehicle power supply device 1 by the predetermined abnormality determination.
   - In the above embodiment, even after completion of the discharging process, the supply of electric power to the power supply control circuit 45 from another power source or the like may continue.
- In the above embodiment, the steering device 2 may be an electric power steering system that applies motor torque to a steering shaft or a rack shaft.
   - In the above embodiment, although the vehicle power supply device 1 supplies electric power to the steering device 2, the present disclosure is not limited to this. For example, the vehicle power supply device 1 may supply electric power to a motor used as a traction drive source.
Next, technical ideas that can be understood from the above embodiment and modifications will be described below.

(Note 1) The control circuit may further be configured to, after completion of the initial check process, execute a charging process in which the auxiliary power supply is charged until the voltage of the auxiliary power supply becomes a standby voltage that is higher than the predetermined voltage.

## Claims

1. A vehicle power supply device configured to supply electric power to a power supply target, the vehicle power supply device comprising:
a power supply line that constitutes a part of a power supply path through which electric power is supplied from an external power supply to the power supply target;
a discharge line branching from the power supply line;
a charge line branching from the power supply line and connected in parallel with the discharge line;
an auxiliary power supply connected to the power supply line via the discharge line and the charge line;
a boost circuit provided in the discharge line;
a buck circuit provided in the charge line;
a plurality of switching elements provided in the discharge line and the charge line;
and
a control circuit configured to control the plurality of switching elements, wherein:
the control circuit is configured to
execute, when a start switch of a vehicle is switched to an ON state, an initial check process including one or more abnormality determinations for detecting an abnormality of the vehicle power supply device, and
execute, when the start switch is switched to an OFF state, a discharging process in which the auxiliary power supply is discharged through the boost circuit until a voltage of the auxiliary power supply reaches a predetermined voltage;
the one or more abnormality determinations include a predetermined abnormality determination that is affected by a voltage of at least one of the discharge line and the charge line; and
the control circuit is further configured to perform, before execution of the one or more abnormality determinations, a restart determination for determining whether at least one of a voltage on an input side of the boost circuit in the discharge line and a voltage on an output side of the boost circuit in the discharge line is greater than or equal to a voltage threshold, and, when at least one of the voltages is greater than or equal to the voltage threshold, not determine that an abnormality has occurred in the vehicle power supply device by the predetermined abnormality determination.

2. The vehicle power supply device according to claim 1, wherein the control circuit stops supply of electric power to the control circuit when the voltage of the auxiliary power supply reaches the predetermined voltage as a result of execution of the discharging process.

3. The vehicle power supply device according to claim 1 or 2, wherein:
the plurality of switching elements includes
a first switching element provided on the input side of the boost circuit in the discharge line,
a second switching element provided on the output side of the boost circuit in the discharge line,
a third switching element provided on an input side of the buck circuit in the charge line, and
a fourth switching element provided on an output side of the buck circuit in the charge line; and
the predetermined abnormality determination includes a determination of short-circuit failures of the third switching element and the fourth switching element.

4. The vehicle power supply device according to claim 3, wherein the control circuit is further configured to determine that a short-circuit failure has occurred in the fourth switching element when a voltage on the output side of the buck circuit in the charge line is greater than or equal to a short-circuit determination threshold, in a state in which the plurality of switching elements is controlled such that no voltage is present on the output side of the buck circuit in the charge line.

5. The vehicle power supply device according to claim 3, further comprising a voltage monitoring circuit configured to detect a voltage of the auxiliary power supply and output, to the control circuit, a voltage monitoring signal indicating the detected voltage of the auxiliary power supply, wherein:
the voltage monitoring circuit is configured to operate based on either the voltage on the output side of the boost circuit in the discharge line or a voltage on the input side of the buck circuit in the charge line, whichever is higher; and
the control circuit is configured to determine that a short-circuit failure has occurred in the third switching element when the voltage monitoring signal is output from the voltage monitoring circuit in a state in which the plurality of switching elements is controlled such that no voltage is present on the output side of the boost circuit in the discharge line and no voltage is present on the input side of the buck circuit in the charge line.

6. A method for controlling a vehicle power supply device configured to supply electric power to a power supply target, the vehicle power supply device including
a power supply line that constitutes a part of a power supply path through which electric power is supplied from an external power supply to the power supply target,
a discharge line branching from the power supply line,
a charge line branching from the power supply line and connected in parallel with the discharge line,
an auxiliary power supply connected to the power supply line via the discharge line and the charge line,
a boost circuit provided in the discharge line,
a buck circuit provided in the charge line, and
a plurality of switching elements provided in the discharge line and the charge line, the method comprising:
executing, when a start switch of a vehicle is switched to an ON state, an initial check process including one or more abnormality determinations for detecting an abnormality of the vehicle power supply device; and
executing, when the start switch is switched to an OFF state, a discharging process in which the auxiliary power supply is discharged through the boost circuit until a voltage of the auxiliary power supply reaches a predetermined voltage, wherein:
the one or more abnormality determinations include a predetermined abnormality determination that is affected by a voltage of at least one of the discharge line and the charge line;
the method further includes performing, before execution of the one or more abnormality determinations, a restart determination for determining whether at least one of a voltage on an input side of the boost circuit in the discharge line and a voltage on an output side of the boost circuit in the discharge line is greater than or equal to a voltage threshold; and
when at least one of the voltages is greater than or equal to the voltage threshold, the predetermined abnormality determination does not determine that an abnormality has occurred in the vehicle power supply device.
